# DEMANDE DE BREVET EUROPEEN

(11) **EP 0 753 428 A1**
(43) Date de publication de la demande: **15.01.1997**
(21) Numéro de dépôt: 96401549.9
(22) Date de dépôt: 12.07.1996
(51) Int. Cl.: B60Q 1/04, F21M 7/00, B60Q 1/00, F21Q 1/00

(54) **Système optique pour dispositif d'éclairage ou de signalisation de véhicule automobile**

(30) Priorité: 13.07.1995 FR 9508512
(71) Demandeur: STANDARD PRODUCTS INDUSTRIEL, F-95871 Bezons (FR)
(72) Inventeur: Chardon, Fernand R., 35500 Vitré (FR); Hautbois, Yvon B., 35500 Vitré (FR)
(74) Mandataire: Busnel, Jean-Benoît

(57) **Abrégé**

L'invention concerne un système optique pour dispositif d'éclairage ou de signalisation de véhicule automobile comprenant notamment un vitrage (1) destiné à obturer au moins partiellement un boîtier de lampe (2) fixé dans une cavité (K) de carrosserie (C), caractérisé en ce que ledit vitrage (1) comporte un surmoulage périphérique (10) en matériau élastiquement déformable portant d'une part, un élément de liaison étanche (11) avec la carrosserie (C) et, d'autre part, sur au moins une partie de son pourtour, un élément d'assemblage (12) avec ledit boîtier (2).

## Description

La présente invention concerne un système optique pour dispositif d'éclairage ou de signalisation de véhicule automobile.

Les systèmes optiques traditionnels comprennent généralement un vitrage destiné à obturer au moins partiellement un boîtier de lampe qui est fixé dans une cavité de carrosserie réalisée à l'avant ou à l'arrière du véhicule.

Cette cavité possède des dimensions plus grandes que celles du boîtier de sorte qu'après montage de ce dernier, il subsiste un espace intercalaire entre la carrosserie et le système optique.

Cet espace est le siège d'infiltrations d'air et d'eau en particulier à l'avant du véhicule, ce qui entraîne des problèmes acoustiques et d'étanchéité.

La présente invention a pour but de résoudre ces problèmes techniques de manière satisfaisante.

Ce but est atteint au moyen d'un système optique pour dispositif d'éclairage ou de signalisation de véhicule automobile comprenant notamment un vitrage destiné à obturer au moins partiellement un boîtier de lampe fixé dans une cavité de carrosserie, caractérisé en ce que ledit vitrage comporte un surmoulage périphérique en matériau élastiquement déformable portant d'une part, un élément de liaison étanche avec la carrosserie et, d'autre part, sur au moins une partie de son pourtour, un élément d'assemblage avec ledit boîtier.

Selon une caractéristique avantageuse, ledit élément de liaison étanche avec la carrosserie comporte une lèvre destinée à venir en appui contre le rebord de ladite cavité.

Selon une autre caractéristique, ledit élément d'assemblage comporte un pied destiné à être rendu solidaire dudit boîtier.

Selon un mode de réalisation particulier, au moins une partie du bord périphérique du vitrage est conformée de façon à définir un logement pour l'élément d'assemblage avec le boîtier.

Dans ce cas, l'élément d'assemblage est fixé dans ledit logement et surmoulé sur le rebord du boîtier.

Selon une variante de réalisation, ledit élément d'assemblage comporte un organe d'accrochage sur le rebord du boîtier.

Selon encore une autre caractéristique, la face extérieure du vitrage est affleurante avec ledit surmoulage.

Selon un autre mode de réalisation, ledit surmoulage est pourvu d'un organe de fixation sur la carrosserie.

On optimise les résultats de l'invention en faisant varier sur la périphérie du vitrage le profil et la géométrie du surmoulage en fonction de la géométrie de la cavité de carrosserie.

Selon encore un autre mode de réalisation, le boîtier est formé d'une seule pièce avec le vitrage.

Le système de l'invention permet d'obtenir une liaison complémentaire avec la carrosserie et, notamment, un affleurement étanche du vitrage du dispositif d'éclairage avec la calandre ou de celui du dispositif de signalisation arrière avec le hayon.

Cette disposition est particulièrement intéressante tant du point de vue aérodynamique que du point de vue esthétique.

En outre, l'assemblage avec le boîtier est facilité et son étanchéité peut être améliorée.

L'invention s'applique à des vitrages réalisés avec tous types de matériaux (verre, matières plastiques..) et le surmoulage peut être constitué de matériaux divers et variés tels que des matières thermoplastiques ou thermodurcissables des élastomères, des plastomères, des silicones.. .

En outre, un aspect extérieur particulier du surmoulage pourra être obtenu par un traitement approprié des surfaces internes des moules et/ou par pigmentation des matières constitutives.

Il est également possible d'intégrer dans le surmoulage des câbles d'alimentation électrique ou des fils chauffants, des capteurs ou des fibres ainsi que des inserts ou des organes de fixation.

L'invention permet donc de disposer d'un système optique complet dont le montage est très facile et qui est susceptible de grouper de façon compacte diverses autres fonctions jusqu'à présent dissociées.

L'invention sera mieux comprise à la lecture de la description qui va suivre accompagnée des dessins sur lesquels :
- la figure 1 représente une vue de dessus en coupe d'un premier mode de réalisation du système de l'invention appliquée à un dispositif d'éclairage de véhicule ;
- la figure 2 représente une vue de dessus en coupe d'un second mode de réalisation du système de l'invention toujours appliquée à un dispositif d'éclairage ;
- la figure 3 représente une vue de dessus en coupe d'un troisième mode de réalisation de l'invention appliquée à un dispositif de signalisation de véhicule ; et,
- la figure 4 représente une vue de dessus en coupe d'un quatrième mode de réalisation de l'invention toujours appliquée à un dispositif de signalisation.

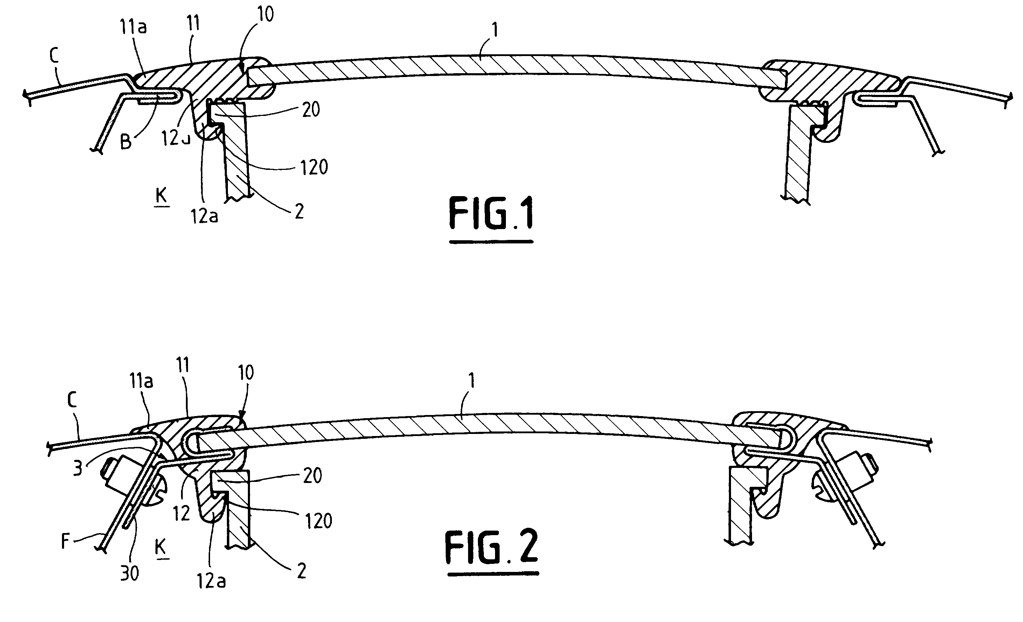

Le système optique représenté sur les figures 1 et 2 est destiné à un dispositif d'éclairage monté à l'avant d'un véhicule automobile.

Ce dispositif comprend un vitrage 1 obturant au moins partiellement un boîtier 2 abritant une ou plusieurs lampes (non représentées). Le boîtier 2 est fixé dans une cavité K de carrosserie C ménagée latéralement à proximité de la calandre.

Dans le système optique de l'invention, le vitrage 1 comporte un surmoulage périphérique 10 en matériau élastiquement déformable.

Le surmoulage 10 porte, d'une part, un élément 11 de liaison étanche avec la carrosserie C et, d'autre part, sur au moins une partie de son pourtour un élément d'assemblage 12 avec le boîtier 2.

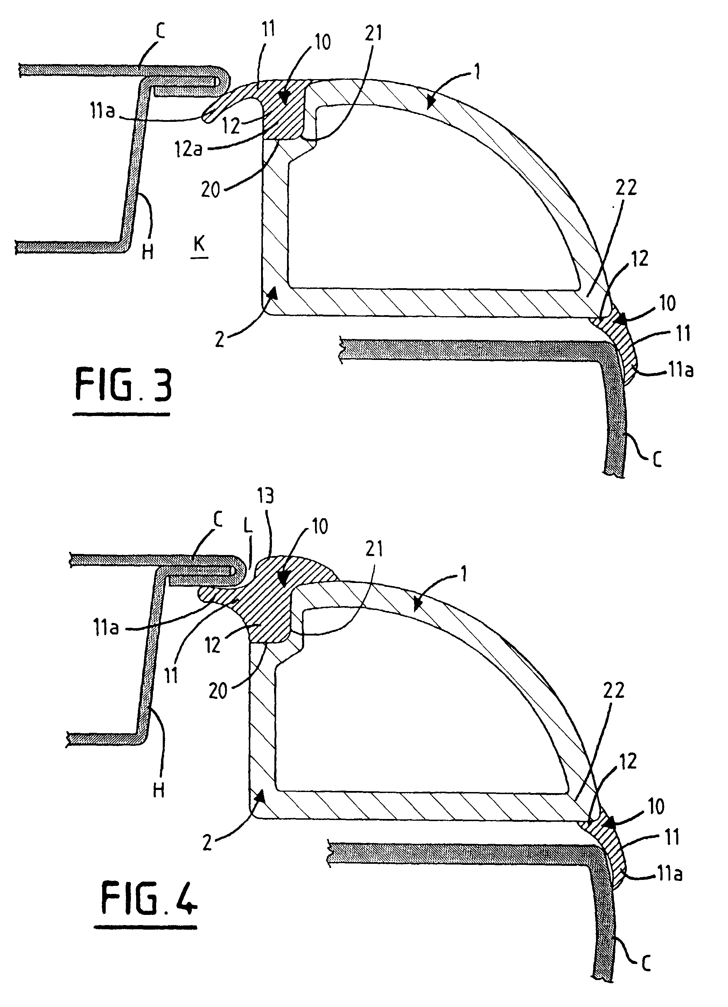

L'élément de liaison 11 comporte une lèvre 11a destinée à venir en appui contre le rebord de la cavité K soit à l'extérieur, comme sur les figures 1 et 2 soit à l'intérieur comme sur les figures 3 et 4.

Pour que le système optique soit ajusté à l'ouverture de la cavité K quelle quel que soit le mode de réalisation de l'invention le profil et la géométrie de surmoulage 10 varient le long de la périphérie du vitrage 1 en fonction de la géométrie de ladite cavité.

L'élément d'assemblage 12 comporte un pied 12a destiné à être rendu solidaire du boîtier 2. Le pied 12a est, par exemple, pourvu d'un crochet 120 dans lequel est engagé de manière éventuellement amovible et étanche un épaulement réalisé sur le rebord 20 du boîtier 2.

Sur la figure 1, la lèvre 11a affleure la carrosserie C en étant logée dans une bordure en creux du rebord B de la cavité K.

Dans le mode de réalisation représenté sur la figure 2, le surmoulage 10 est pourvu d'un organe de fixation 3 sur la carrosserie C.

Cet organe est par exemple constitué d'un insert métallique partiellement noyé dans le surmoulage 10 et possédant une patte d'ancrage 30 vissée sur une feuillure interne F de carrosserie.

Le système optique représenté sur les figures 3 et 4 est destiné à un dispositif de signalisation monté par exemple à l'arrière d'un véhicule automobile.

Ce dispositif comprend un vitrage 1 (généralement de couleur rouge ou orange) qui ferme ici le boîtier 2 en étant formé d'une seule pièce avec lui.

L'ensemble boîtier 2/vitrage 1 est fixé dans une cavité K située à proximité de l'angle arrière du véhicule (comme représenté sur les figures 3 et 4) et bordée latéralement par le hayon arrière mobile H.

Le vitrage 1 comporte un surmoulage périphérique 10 en matériau élastiquement déformable portant d'une part un élément de liaison étanche 11 pourvu d'une lèvre 11a et, d'autre part, un élément d'assemblage 12 avec le boîtier 2. Mais le boîtier 2 est ici directement solidaire du vitrage 1.

La lèvre 11a vient en appui contre le rebord B par l'intérieur de la cavité K et la face extérieure apparente du vitrage 1 est affleurante avec le surmoulage 10.

Dans la zone de jonction avec le boîtier 2, du côté du hayon H, le bord périphérique du vitrage 1 délimite un logement 21 destiné à recevoir le pied 12a de l'élément d'assemblage 12.

L'élément d'assemblage 12 est fixé par surmoulage direct sur le rebord 20 du boîtier 2 dans le logement 21 et renforce ainsi la jonction entre le boîtier 2 et le vitrage 1.

Du côté latéral de la carrosserie, le surmoulage 10 est fixé sur la zone angulaire de jonction 22 entre le vitrage 1 et le boîtier 2.

L'élément de liaison 11 et l'élément d'assemblage 12 sont alors dans le prolongement l'un de l'autre et la lèvre 11a vient en appui étanche contre la carrosserie par l'extérieur.

Dans le mode de réalisation de la figure 4, le surmoulage 10, dans sa partie adjacente au hayon H, comporte un bossage externe 13.

Le bossage 13 délimite avec la lèvre 11a un logement L destiné à recevoir le bord latéral du hayon mobile H.

La face extérieure du hayon H est ainsi affleurante avec le bossage 13, ce qui garantit une bonne étanchéité de la fermeture.

## Revendications

1. Système optique pour dispositif d'éclairage ou de signalisation de véhicule automobile comprenant notamment un vitrage (1) destiné à obturer au moins partiellement un boîtier de lampe (2) fixé dans une cavité (K) de carrosserie (C), caractérisé en ce que ledit vitrage (1) comporte un surmoulage périphérique (10) en matériau élastiquement déformable portant un élément de liaison étanche (11) avec la carrosserie (C), un organe de fixation (3) sur la carrosserie (C) et, sur au moins, une partie de son pourtour, un élément d'assemblage (12) avec ledit boîtier (2).

2. Système selon la revendication 1, caractérisé en ce que ledit organe de fixation (3) sur la carrosserie est constitué d'un insert partiellement noyé dans le surmoulage (10) et possédant une patte d'ancrage (30).

3. Système selon la revendication 1 ou 2, caractérisé en ce que ledit élément de liaison étanche (11) avec la carrosserie (C) comporte une lèvre (11a) destinée à venir en appui contre le rebord (B) de ladite cavité (K).

4. Système selon l'une des revendications précédentes, caractérisé en ce que ledit élément d'assemblage (12) comporte un pied (12a) destiné à être rendu solidaire dudit boîtier (2).

5. Système selon l'une des revendications précédentes, caractérisé en ce qu'au moins une partie du bord périphérique du vitrage (1) est conformée de façon à définir un logement (21) pour l'élément d'assemblage (12) avec le boîtier (2)

6. Système selon la revendication 5, caractérisé en ce que l'élément d'assemblage (12) est fixé dans ledit logement (21) et surmoulé sur le rebord (20) du boîtier (2).

7. Système selon l'une des revendications 1 à 5, caractérisé en ce que ledit élément d'assemblage (12) comporte un organe d'accrochage (120) sur le rebord (20) du boîtier (2).

8. Système selon l'une des revendications précédentes, caractérisé en ce que la face extérieure du vitrage (1) est affleurante avec ledit surmoulage (10).

9. Système selon l'une des revendications précédentes caractérisé en ce que le profil et la géométrie du surmoulage (10) varient le long de la périphérie du vitrage (1) en fonction de la géométrie de ladite cavité (K) de carrosserie (C).

10. Système selon l'une des revendications précédentes, caractérisé en ce que le boîtier (2) est formé d'une seule pièce avec le vitrage (1).
